# EUROPÄISCHE PATENTSCHRIFT

(11) **EP 1 936 149 B1**
(45) Veröffentlichungstag und Bekanntmachung des Hinweises auf die Patenterteilung: **14.10.2009**
(21) Anmeldenummer: 06026684.8
(22) Anmeldetag: 22.12.2006
(51) Int. Cl.: F02C 7/266, F23Q 5/00, H01T 13/08

(54) **Brenner einer Gasturbine**
Gas turbine burner
Brûleur d'une turbine à gaz

(43) Veröffentlichungstag der Anmeldung: 25.06.2008
(73) Patentinhaber: SIEMENS AKTIENGESELLSCHAFT, 80333 München (DE)
(72) Erfinder: Böttcher, Andreas, Dr., 40882 Ratingen (DE); Kluge, Andre, 48249 Dülmen (DE); Krusch, Claus, 45473 Mülheim an der Ruhr (DE); Pfeiffer, Elmar, 52525 Heinsberg (DE)

(56) Entgegenhaltungen:
- EP-A2- 1 111 219
- DE-A1- 4 340 616
- GB-A- 717 755
- US-A- 2 933 896
- US-A- 3 264 825
- US-A- 3 911 672

## Beschreibung

### Hintergrund der Erfindung

Die Erfindung betrifft einen Brenner einer Gasturbine.

Eine Gasturbine umfasst im Wesentlichen einen Verdichter, eine Brennkammer, eine Turbine und einen Abgasdiffusor. Im Verdichter wird angesaugte Luft verdichtet und dem Brenner zur Vermischung mit Brennstoff und Zündung in der Brennkammer zugeführt. Das aus der Brennkammer austretende, unter Druck stehende Heissgas wird in die Turbine geleitet. Dort treibt es die Turbine an, die an einen Generator gekoppelt ist und so zur Stromerzeugung dient. Nach Austritt aus der Turbine tritt das entspannte Heißgas in den Abgasdiffusor ein und kann für Wärmetauscher verwendet werden.

Der Brenner der Gasturbine, der am Eintritt der Brennkammer angeordnet ist, ist mit Zündelektroden ausgestattet, die beim Start des Brenners Verwendung finden. Die Zündelektroden sind direkt an den Gasaustrittsöffnungen angeordnet und entzünden das dort austretende Gas. Der Zündfunke wird durch die Zündspannung zwischen zwei Zündelektroden erzeugt und steht während der gesamten Zünddauer an. Für einen optimalen Zündfunken ist die genaue Einhaltung des vorgeschriebenen Abstandes zwischen den beiden Zündelektroden erforderlich.

Die US 2,933,896 A beschreibt einen Brenner mit zwei Zündelektroden und einer Halterung, wobei die Halterung die Zündelektroden aufnimmt und wobei die Zündelektroden axial verschieblich in der Halterung gelagert sind.

Eine mangelnde radiale Befestigung kann Probleme verursachen, da ein optimaler Abstand der Zündelektroden voneinander nicht gewährleistet werden kann. Andererseits kann auch eine radiale Fixierung, welche die Lage der Elektroden exakt fixiert, zu Problemen führen, wenn thermische Dehnungen der Elektroden zu Spannungen im Material führen.

### Aufgabe der Erfindung

Der Erfindung liegt die Aufgabe zu Grunde, einen Brenner einer Gasturbine mit einer vorteilhaften Fixierung der Zündelektroden zur Verfügung zu stellen.

### Erfindungsgemäße Lösung

Die Aufgabe wird durch einen Brenner, und insbesondere einen Gasturbinenbrenner, mit den Merkmalen des Anspruchs 1 gelöst. Die abhängigen Ansprüche enthalten vorteilhafte Weiterbildungen der Erfindung.

Erfindungsgemäß besteht die Lösung der Aufgabe in einem Brenner, und insbesondere einen Gasturbinenbrenner, mit zwei Zündelelektroden und einer Halterung. Die Halterung ist an der Außenfläche des Brenners angeordnet und nimmt die Zündelektroden auf. Dabei sind die Zündelektroden axial verschieblich in der Halterung gelagert. Die Zündelektroden sind dabei radial federnd in der Halterung gelagert. Die radiale Federung ermöglicht den Ausgleich von Schwingungen, wodurch die Lebensdauer der Zündelektrode erhöht wird.

Die Halterung ermöglicht eine axiale Verschiebung der Zündelektrode. Eine derartige axiale Verschiebung kann durch Wärmeeinfluss verursacht werden. Durch die axial verschiebliche Lagerung können Wärmespannungen in der Zündelektrode vermindert werden. Gleichzeitig können die Zündelektroden radial sicher fixiert sein, so dass Probleme, die aus mangelnder Abstandstreue der Elektroden resultieren, vermieden werden können.

In einer vorteilhaften Weiterbildung der Erfindung weist jede Zündelektrode eine keramische Ummantelung und eine Hülse auf, wobei die Hülse mit der keramischen Ummantelung der jeweiligen Zündelektrode verklebt ist. Jede Hülse ist außerdem mit einem Führungsschlitten verbunden. Die keramische Ummantelung dient der thermischen Isolierung der Zündelektrode, was die wärmebedingte Dehnung verringert. Die Hülse wird als Trägerelement für die Zündelektrode eingesetzt. Der Führungsschlitten ermöglicht eine Linearführung der Zündelektrode zum Ausgleich der thermischen Restdehnung der Zündelektrode.

Zusätzlich weist der Brenner ein Führungselement mit wenigstens einer Führungsnut für jeden Führungsschlitten auf, wobei jeder Führungsschlitten in eine Führungsnut eingeführt ist.

Durch die Kombination von Führungsschlitten und Führungsnut wird die axiale Verschiebbarkeit der Zündelektrode in der Halterung gewährleistet. Dadurch werden kritische Spannungen in der Zündelektrode und damit ein möglicher Bruch vermieden. Außerdem ist das Einstellen des Abstands der Zündelektroden bereits bei der Fertigung des Führungselements möglich. Weiterhin verringert diese Anordnung die radiale Beweglichkeit der Zündelektrode, wodurch auch Schwingungen vermieden werden.

Das Führungselement kann an die Außenfläche des Brenners angeschraubt sein. Eine Schraubenverbindung ermöglicht eine einfache Montage und Demontage und gewährleistet eine leichte Austauschbarkeit der Zündelektroden bei Verschleiß. Es ist außerdem keine Schweißnaht, wie bisher üblich, erforderlich.

In einer weiteren vorteilhaften Ausgestaltung der Erfindung ist die Halterung eine Blattfederführung, die aus einer Hülse mit am Umfang der Hülsenenden verteilten Blattfedern gebildet ist. Die Blattfedern können insbesondere gleichmäßig über den Umfang der Hülsenenden verteilt sein. Diese Anordnung stellt eine alternative zur der Anordnung mit Führungsschiene dar, die ebenfalls die axiale Verschiebbarkeit der Zündelektrode bei Wärmedehnung gewährleistet. Auch hier werden radiale und tangentiale Bewegungen (Schwingungen) vermieden. Es werden außerdem kritische Spannungen in der Zündelektrode aufgrund der Wärmeausdehnung und damit Brüche der Zündelektroden vermieden. Außerdem ist eine leichte Austauschbarkeit der Zündelektrode gewährleistet. Die Blattfedern können insbsondere radial vorgespannt sein, was für eine radiale Führung und für eine gute Zentrierung sorgt.

Die radiale Vorspannung der Blattfedern ermöglicht außerdem eine radiale thermische Ausdehnung der Zündelektrode bei Wärmeeinfluss. Die Anordnung stellt zudem eine gute Halterung für Zündelektroden mit keramischer Ummantelung zur Verfügung, da zwischen der Hülse und der Keramikummantelung der Zündelektrode kein Kontakt besteht. Lediglich die Blattfedern halten die Zündelektrode einschließlich der Keramikummantelung.

Die Halterung kann auch aus einer Hülse und einer Radialfeder gebildet sein, wobei die Innenseite der Radialfeder an der Zündelektrode und die Außenseite der Radialfeder an der Innenseite der Hülse anliegen. Diese Anordnung stellt eine Alternative zur der Halterung mit Blattfederführung dar. Die Vorteile ergeben sich entsprechend wie oben bereits beschrieben.

Als weitere alternative Weiterbildung der Erfindung kann die Halterung aus wenigstens einem Federelement und einer geteilten Schelle gebildet sein, wobei die Schelle an Ihrer Innenseite eine Aussparung aufweist, in der das Federelement aufgenommen ist. Diese Anordnung stellt eine weitere Alternative zur Blattfederführung der Zündelektrode dar. Auch hier liegt eine radial federnde Fixierung der Zündelektroden vor, wobei gleichzeitig die axiale Verschiebbarkeit gewährleistet ist. Es werden ebenfalls kritische Spannungen in der Zündelektrode vermieden. Weiterhin werden die Schwingungen der Zündelelektrode während des Betriebs des Brenners durch die Federelemente aufgenommen. Die Anordnung ermöglicht eine gute Montierbarkeit und Austauschbarkeit. Die Schelle ist zweigeteilt, um Biegespannungen der Zündelektrode aufzunehmen. Das Federelement kann ringförmig ausgebildet sein. Alternativ kann auch das Federelement entsprechend der Schelle in Längsrichtung zweigeteilt sein, also aus zwei halbringförmigen Teilen bestehen. Dadurch kann das Federelement bei Bedarf leichter ausgetauscht werden.

### Kurzbeschreibung der Zeichnungen

Weitere Merkmale, Eigenschaften und Vorteile der Erfindung ergeben sich aus der nachfolgenden Beschreibung von Ausführungsbeispielen unter Bezugnahme auf die beiliegenden Figuren. Es zeigen:
Fig. 1 einen Brenner mit Zündelektroden.
Fig. 2 eine Halterung mit Führungsschlitten und Führungsschiene.
Fig. 3 eine Halterung mit Blattfederelementen.
Fig. 4 eine Anordnung mit einer Halterung mit einer Radialfeder.
Fig. 5 eine radiale Blattfeder
Fig. 6 ein Querschnitt durch eine Halterung mit einer Radialfeder.
Fig. 7 eine Halterung mit einer Radialfeder und einer geteilten Schelle.
Fig. 8 eine Schellenhälfte mit einer Aussparung.
Fig. 9 eine Schellenhälfte mit zwei Aussparungen.

### Detaillierte Beschreibung der Ausführungsbeispiele

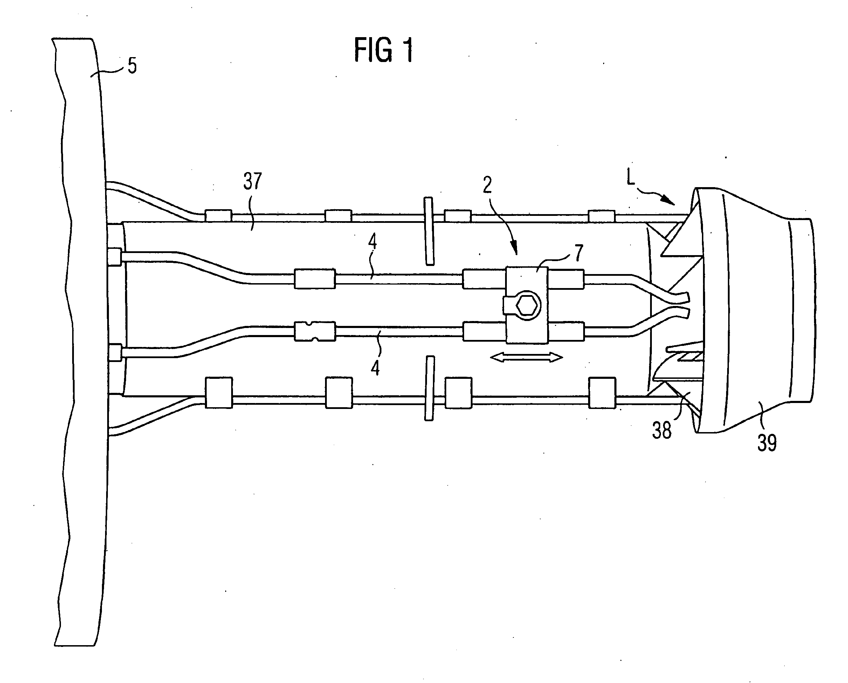

Fig. 1 zeigt einen Brenner 3 für eine Gasturbine mit einem Flansch 5, einem Rohr 37, einem Swirler 38 und einer Düse 39. Weiterhin weist der Brenner Zündelektroden 4 und eine Halterung 2 mit Schellen 7 auf.

Das Rohr 37 grenzt an den Flansch 5 an. Beide Elemente sind leicht exzentrisch zueinander angeordnet. An der Außenseite des Rohres 37 sind die Zündelektroden 4 mit einer Halterung 2 befestigt. An das Rohr 37 schließt sich ein Swirler 38 an. Dieser ist von der Düse 39 konzentrisch umgeben.

Im Betrieb wird Luft L in den Swirler 38 eingeführt und durch die Schaufeln des Swirlers 38 verwirbelt. Gleichzeitig wird dem Swirler 38 durch das Innere des Rohres 37 Brennstoff zugeführt. Der Brennstoff wird durch einen Zündfunken, der zwischen den beiden Zündelektroden 4 gebildet wird, gezündet. Es bildet sich eine Flamme aus, die in die Brennkammer (nicht dargestellt) hineinragt und das Luft-Brennstoff-Gemisch verbrennt. Das so entstandene Heißgas wird der Turbine zugeführt.

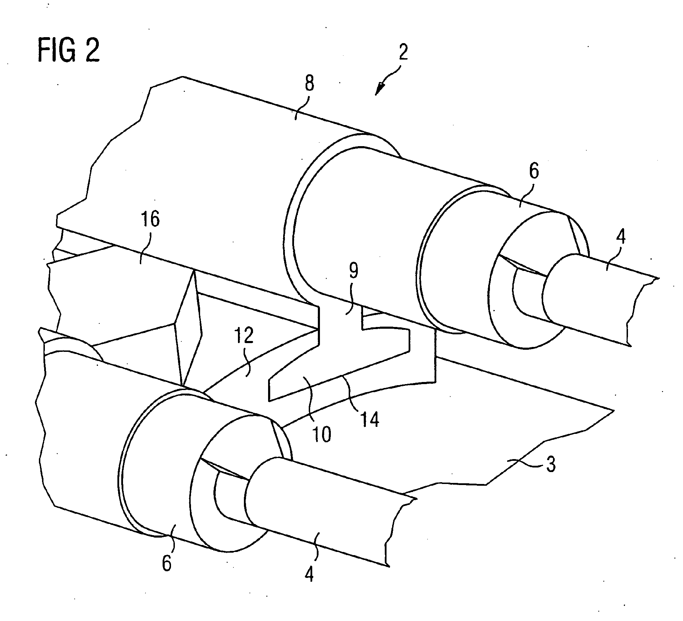

Nachfolgend werden verschiedene Varianten der Halterung 2 mit Bezug auf die Figuren 2 bis 9 im Deatil beschrieben.

In Fig. 2 ist, die nicht zur Erfindung gehört, eine Anordnung mit einer Halterung für eine Zündelektrode dargestellt. Die Anordnung umfasst einen Brenner 3, eine Zündelektrode 4 mit einer keramischen Ummantelung 6, eine Hülse 8, einen Führungsschlitten 10, ein Führungselement 12 mit Führungsnuten 14 und Schrauben 16.

Die beiden Zündelektroden 4 sind im Bereich der Halterung 8 mit einer keramischen Ummantelung 6 versehen. Im Bereich der keramischen Ummantelung wird die Zündelektrode 4 von einer Hülse 8 gehalten, die die keramische Ummantelung ringförmig umschließt. Die Hülse 8 ist mit der keramischen Ummantelung 6 fest verklebt. Die Hülse 8 ist außerdem über ein Verbindungsstück 9 mit einem schienenartigen Führungsschlitten 10 verbunden. Der Führungsschlitten 10 ist entlang seiner Längsachse in eine Nut 14 eingeführt, die an den Führungsschlitten 10 angepasst ist. Die Nut 14 befindet sich in dem Führungselement 12. Das Führungselement ist durch Schrauben 16 an der Außenkontur des Brenners 3 befestigt. Es weist für jede Führungsschiene, die zu einer Zündelektrode gehört, eine eigene Führungsnut 14 auf.

Im Betrieb dehnt sich die Zündelektrode 4 in Längsrichtung aus und bewegt damit den über die Hülse 8 mit der Zündelektrode 4 verbundenen Führungsschlitten 10 in Längsrichtung der Elektrode. Zwischen der Nut 14 und dem Führungsschlitten 10 ist ausreichend Spiel vorhanden, so dass bei einer wärmebedingten Ausdehnung der Elektrode 4 der Führungsschlitten 10 in der Führungsnut 14 des Führungselements 12 bewegt wird.

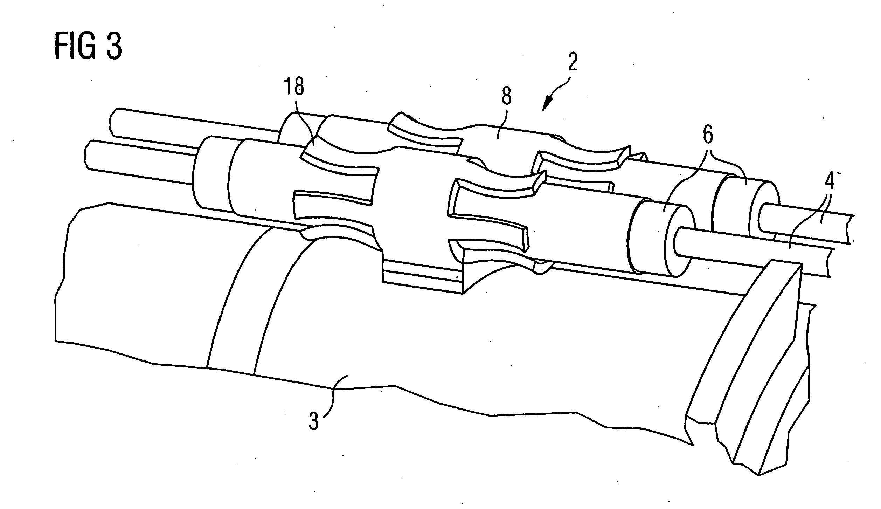

Fig. 3 zeigt als ein Ausführungsbeispiel der Erfindung eine Halterung für Zündelektroden 4, die eine Hülse 8 mit Blattfedern 18 umfasst.

Die Zündelektroden 4 sind wie in Fig.2 im Bereich der Halterung 2 mit einer keramischen Ummantelung 6 umgeben. In der Mitte der keramischen Ummantelung befindet sich für jede Zündelektrode 4 eine Hülse 8, die an ihren beiden Enden mit mehreren gleichmäßig über den Umfang verteilt angeordneten Blattfedern 18 versehen ist. Obwohl die gleichmäßige Verteilung der Federn im Hinblick auf die gleichmäßige Verteilung der Federkräfte auf die Ummantelung 6 vorteilhaft ist, ist grundsätzlich auch eine ungleichmäßige Verteilung der Blattfedern 18 über den Umfang möglich. Die Blattfedern 18, die radial vorgespannt sind, halten die keramische Ummantelung 6, während die Hülse 8 die keramische Ummantelung 6 nicht berührt. Die beiden Hülsen 8 für jede Zündelektrode 4 sind über ein Befestigungselement (nicht sichtbar) mit dem Brenner 3 verbunden. Dies kann beispielsweise eine Schraubverbindung 16 sein.

Im Betrieb ist durch die gezeigte Anordnung eine axiale Verschiebung der Zündelektroden 4 möglich. Eine Bewegung in radialer Richtung wird durch die radial vorgespannten Blattfedern 18 abgefedert. Auf diese Weise werden Schwingungen der Zündelektroden abgefangen.

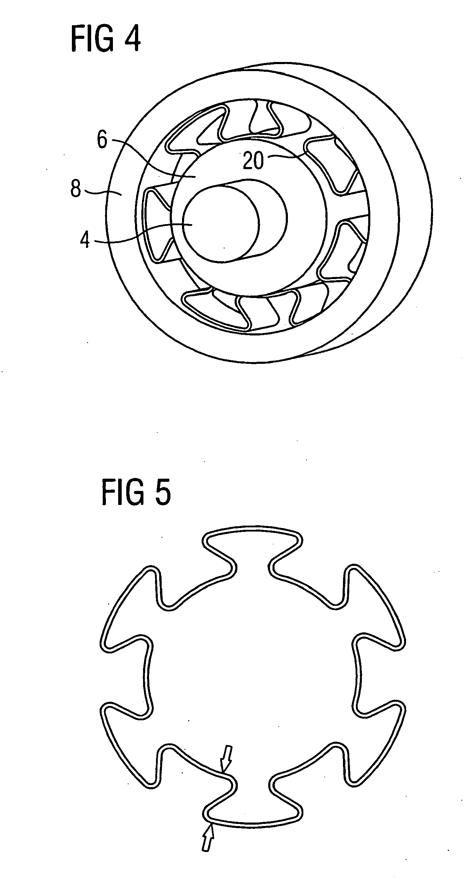

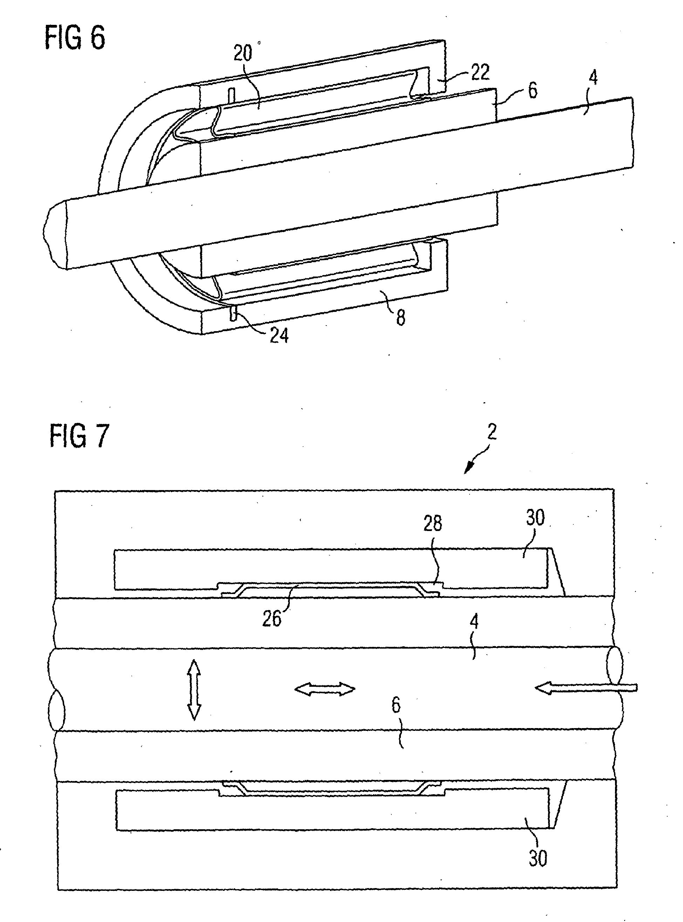

Die. Fig. 4, 5 und 6 beziehen sich auf eine Anordnung von Zündelektroden 4 in einer Halterung 2 mit wenigstens einer Radialfeder 20. In Fig. 4 ist die vollständige Anordnung zu erkennen, in Fig. 5 ist die einzelne Radialfeder dargestellt und in Fig. 6 ist ein Schnitt durch eine Anordnung gemäß Fig. 4 dargestellt.

In Fig. 4 ist die Zündelektrode, wie bereits oben beschrieben mit einer keramischen Ummantelung 6 ringförmig umgeben. Die ummantelte Zündelektrode 4 befindet sich an den nach innen gerichteten Abschnitten der Radialfeder 20.

Die Radialfeder ist mehrfach S-förmig gebogen (s. Fig. 5). Wie in Fig. 5 durch die Pfeile angedeutet, ist die Radialfeder im Bereich der S-förmigen Abschnitte nachgiebig gestaltet.

Die äußeren Abschnitte der Radialfeder 20 liegen an der Innenseite der Hülse 8 an. Wie in Fig. 6 sichtbar weist die Hülse 8 an ihrem einen Ende einen Anschlag 22 auf, von dem die Radialfeder gegen Verschieben gesichert wird. An dem anderen Ende der Hülse 8 befindet sich an der Innenseite eine umlaufende Nut 24, in die ein Sicherungsring eingesetzt werden kann. Der Sicherungsring (nicht dargestellt) verhindert eine Verschiebung der Radialfeder in Längsrichtung.

Im Betrieb kann sich die Zündelektrode 4 mit der keramischen Ummantelung 6 in Längsrichtung bewegen, während radiale Bewegungen (Schwingungen) durch die Radialfeder 20 aufgefangen werden.

Statt der einen in den Figuren 4 bis 6 dargestellten Radialfeder 20 können auch mehrere, axial hintereinander angeordnete Radialfedern mit entsprechend kürzerer axialen Länge vorhanden sein.

Eine weitere alternative Ausführungsform ist in Fig. 7 dargestellt. Die Anordnung umfasst eine Zündelektrode 4 mit einer keramischen Ummantelung 6, eine Schelle 7 und ein ringförmiges Federelement 26.

Die Zündelektrode 4 ist, wie bereits oben beschrieben, von einer keramischen Ummantelung 6 ringförmig umgeben. Die Schelle 7 umgibt die Zündelektrode im Bereich der keramischen Ummantelung. Zwischen der Schelle 7 und der ummantelten Zündelektrode 4 befindet sich das Federelement 26, das an seinen beiden axialen Enden abgewinkelt ist und auf diese Weise die Federung bewirkt. Die Schelle 7 weist eine Aussparung auf 28, in die das Federelement 26 eingesetzt ist.

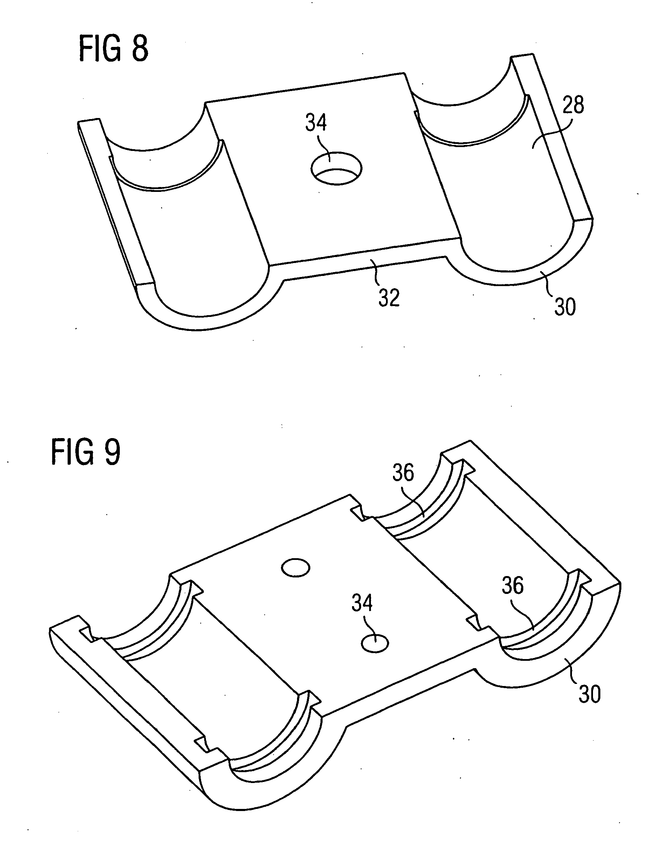

Die Schelle 7 ist zweigeteilt. Jeweils eine Hälfte der Schelle 7 ist in den Fig. 8 und 9 dargestellt. Die beiden Figuren zeigen unterschiedliche Ausführungsformen der Schellenhälften 30. In den Fig. 8 und 9 ist die Schelle 7 derart ausgeführt, dass sie zwei halbkreisförmige Schellenhälften 30 aufweist, die zusammen die Zündelektroden 4 umschließen. Die beiden Schellenhälften 30 sind durch den Verbindungsabschnitt 32 mit einander verbunden. Der Verbindungsabschnitt 32 weist eine Bohrung 34 auf, die zur Befestigung der Schelle 7 auf dem Brenner 3 dient. Innerhalb jeder Schellenhälfte 30 befindet sich jeweils eine Aussparung 28, die zur Aufnahme des Federelements dient (siehe Fig. 5).

In Fig. 9 ist eine alternative Ausführungsform der Schelle dargestellt, wobei die Schellenhälften 30 jeweils zwei Aussparungen 36 auf der Innenseite aufweisen, die ebenfalls zur Aufnahme eines Federelements dienen.

Bei der Montage wird zunächst das ringförmige Federelement 26 auf die Zündelektrode 4 mit der keramischen Ummantelung 6 aufgeschoben. Alternativ können auch jeweils zwei geteilte, halbringförmige Federelemente verwendet werden. Danach werden die Schellenhälften 30 so zusammengesetzt, dass sie zusammen die beiden Elektroden 4 mit den aufgeschobenen Federelementen umschließen.

## Patentansprüche

1. Brenner (3) mit zwei Zündelektroden (4) und einer Halterung (2), wobei die Halterung (2) an der Außenfläche des Brenners (3) angeordnet ist und die Zündelektroden (4) aufnimmt, wobei die Zündelektroden (4) axial verschieblich in der Halterung (2) gelagert sind, **dadurch gekennzeichnet,** das s die Zündelektrode (4) radial federnd in der Halterung (2) gelagert ist.

2. Brenner nach Anspruch 1, **dadurch gekennzeichnet, dass** jede Zündelektrode (4) eine keramische Ummantelung (6) und eine Hülse (8) aufweist, wobei die Hülse (8) mit der keramischen Ummantelung (6) der jeweligen Zündelektrode (4) verklebt ist und wobei jede Hülse (8) mit einem Führungsschlitten (10) verbunden ist.

3. Brenner nach Anspruch 2, **dadurch gekennzeichnet, dass** der Brenner (3) ein Führungselement (12) mit wenigstens einer Führungsnut (14) für jeden Führungsschlitten (10) aufweist und jeder Führungsschlitten (10) in eine Führungsnut (14) eingeführt ist.

4. Brenner nach Anspruch 3, **dadurch gekennzeichnet, dass** das Führungselement (12) an die Außenfläche des Brenners (3) angeschraubt ist.

5. Brenner nach einem der vorhergehenden Ansprüche , **dadurch gekennzeichnet, dass** die Halterung (2) eine Blattfederführung ist, die aus einer Hülse (8) mit am Umfang der Hülsenenden verteilten Blattfedern (18) gebildet ist.

6. Brenner nach Anspruch 5, **dadurch gekennzeichnet, dass** die Blattfedern (18) gleichmäßig am Umfang der Hülsenenden verteilt sind.

7. Brenner nach Anspruch 5 oder 6, **dadurch gekennzeichnet**, da s s die Blattfedern (18) radial vorgespannt sind.

8. Brenner nach Anspruch 1, **dadurch gekennzeichnet, dass** die Halterung (2) aus einer Hülse (8) und wenigstens einer Radialfeder (20) gebildet ist, wobei die Innenseite der Radialfeder (20) an der Zündelektrode (4) und die Außenseite der Radialfeder (20) an der Innenseite der Hülse (8) anliegt.

9. Brenner nach Anspruch 1, **dadurch gekennzeichnet, dass** die Halterung (2) aus wenigstens einem Federelement (26) und einer geteilten Schelle (7) gebildet ist, wobei die Schelle (7) an ihrer Innenseite mindestens eine Aussparung (28) aufweist, in der das Federelement (26) aufgenommen ist.

10. Brenner nach Anspruch 9, **dadurch gekennzeichnet**, das s das Federelement (26) aus zwei halbringförmigen Teilen besteht.

11. Gasturbine mit einem Brenner nach einem der vorangegangenen Ansprüche.

## Claims

1. Burner (3) with two ignition electrodes (4) and with a holding device (2), the holding device (2) being arranged on the outer face of the burner (3) and receiving the ignition electrodes (4), the ignition electrodes (4) being mounted axially displaceably in the holding device (2), **characterized in that** the ignition electrode (4) is mounted in the holding device (2) resiliently in the radial direction.

2. Burner according to Claim 1, **characterized in that** each ignition electrode (4) has a ceramic sheathing (6) and a sleeve (8), the sleeve (8) being adhesively bonded to the ceramic sheathing (6) of the respective ignition electrode (4), and each sleeve (8) being connected to a guide slide (10).

3. Burner according to Claim 2, **characterized in that** the burner (3) has a guide element (12) with at least one guide groove (14) for each guide slide (10), and each guide slide (10) is introduced into a guide groove (14).

4. Burner according to Claim 3, **characterized in that** the guide element (12) is screwed to the outer face of the burner (3).

5. Burner according to one of the preceding claims, **characterized in that** the holding device (2) is a leafspring guide which is formed from a sleeve (8) having leaf springs (18) distributed on the circumference of the sleeve ends.

6. Burner according to Claim 5, **characterized in that** the leaf springs (18) are distributed uniformly on the circumference of the sleeve ends.

7. Burner according to Claim 5 or 6, **characterized in that** the leaf springs (18) are prestressed in the radial direction.

8. Burner according to Claim 1, **characterized in that** the holding device (2) is formed from a sleeve (8) and from at least one radial spring (20), the inside of the radial spring (20) bearing against the ignition electrode (4), and the outside of the radial spring (20) bearing against the inside of the sleeve (8).

9. Burner according to Claim 1, **characterized in that** the holding device (2) is formed from at least one spring element (26) and from a split clip (7), the clip (7) having on its inside at least one clearance (28) in which the spring element (26) is received.

10. Burner according to Claim 9, **characterized in that** the spring element (26) consists of two semi-annular parts.

11. Gas turbine having a burner according to one of the preceding claims.

## Revendications

1. Brûleur ( 3 ) comprenant deux électrodes ( 4 ) d'allumage et une fixation ( 2 ), la fixation étant disposée sur la surface extérieure du brûleur ( 3 ) et recevant les électrodes ( 4 ) d'allumage, les électrodes ( 4 ) d'allumage étant montées coulissantes axialement dans la fixation ( 2 ), **caractérisé en ce que** les électrodes ( 4 ) d'allumage sont montées élastiquement radialement dans la fixation ( 2 ).

2. Brûleur suivant la revendication 1, **caractérisé en ce que** chaque électrode ( 4 ) d'allumage a une enveloppe ( 6 ) en céramique et un manchon ( 8 ), le manchon ( 8 ) étant collé à l'enveloppe ( 6 ) en céramique de l'électrode ( 4 ) d'allumage respective et chaque manchon ( 8 ) étant relié à un chariot ( 10 ) de guidage.

3. Brûleur suivant la revendication 2, **caractérisé en ce que** le brûleur ( 3 ) a un élément ( 12 ) de guidage ayant au moins une rainure ( 14 ) de guidage pour chaque chariot ( 10 ) de guidage et chaque chariot ( 10 ) de guidage est guidé dans une rainure ( 14 ) de guidage.

4. Brûleur suivant la revendication 3, **caractérisé en ce que** l'élément ( 12 ) de guidage est vissé à la surface extérieure du brûleur ( 3 ).

5. Brûleur suivant l'une des revendications précédentes, **caractérisé en ce que** la fixation ( 2 ) est un guidage à ressorts à lame qui est formé d'un manchon ( 8 ) ayant des ressorts ( 18 ) à lame répartis sur le pourtour des extrémités du manchon.

6. Brûleur suivant la revendication 5, **caractérisé en ce que** les ressorts ( 18 ) à lame sont répartis uniformément sur le pourtour des extrémités du manchon.

7. Brûleur suivant la revendication 5 ou 6, **caractérisé en ce que** les ressorts ( 18 ) à lame sont précontraints radialement.

8. Brûleur suivant la revendication 1, **caractérisé en ce que** la fixation ( 2 ) est formée d'un manchon ( 8 ) et d'au moins un ressort ( 20 ) radial, le côté intérieur du ressort ( 20 ) radial s'appliquant à l'électrode ( 4 ) d'allumage et le côté extérieur du ressort ( 20 ) radial au côté intérieur du manchon ( 8 ).

9. Brûleur suivant la revendication 1, **caractérisé en ce que** la fixation ( 2 ) est formée d'au moins un élément ( 26 ) à ressort et d'un collier ( 7 ) fendu, le collier ( 7 ) ayant sur sa face intérieure, au moins un évidement ( 28 ), dans lequel l'élément ( 26 ) à ressort est reçu.

10. Brûleur suivant la revendication 9, **caractérisé en ce que** l'élément ( 26 ) à ressort est constitué de deux parties hémi-annulaires.

11. Turbine à gaz comprenant un brûleur suivant l'une des revendications précédentes.
